**Europäisches Patentamt**

**European Patent Office**

**Office européen des brevets**

(19)

(11) Veröffentlichungsnummer: **0 009 105**
**B1**

(12) **EUROPÄISCHE PATENTSCHRIFT**

(45) Veröffentlichungstag der Patentschrift:
**09.12.81**

(21) Anmeldenummer: **79102768.3**

(22) Anmeldetag: **02.08.79**

(51) Int. Cl.³: **F 16 L 9/12,** F 16 L 9/18,
E 03 F 3/04

(54) **Leitungsrohr aus Kunststoff.**

(30) Priorität: **15.09.78 DE 2840174**

(43) Veröffentlichungstag der Anmeldung:
**02.04.80 Patentblatt 80/7**

(45) Bekanntmachung des Hinweises auf die Patenterteilung:
**09.12.81 Patentblatt 81/49**

(84) Benannte Vertragsstaaten:
**AT BE CH FR GB NL**

(56) Entgegenhaltungen:
**DE-B-2 321 315**
**DE-U-1 909 468**
**DE-U-1 918 099**
**DE-U-6 908 040**
**DE-U-7 007 700**
**GB-A-1 235 580**
**GB-A-1 249 566**
**GB-A-1 279 498**
**US-A- 977 945**
**US-A-3 572 394**
**US-A-4 037 626**

(73) Patentinhaber: **Ziegel- und Kunststoffwerke Heinrich
Oltmanns, D-2905 Edewecht/Jeddeloh 1 (DE)**

(72) Erfinder: **Granz, Axel, Osterkampsweg 71a,
D-2900 Oldenburg (DE)**
Erfinder: **Oltmanns, Heinrich, D-2905 Jeddeloh I (DE)**

(74) Vertreter: **Hauck, Hans, Dipl.-Ing. et al, Patentanwälte
Dipl.-Ing.H.Hauck, Dipl.-Phys.W.Schmitz,
Dipl.-Ing.E.Graalfs, Dipl.-Ing.W.Wehnert,
Dipl.-Phys.W.Carstens Dr.-Ing.W.Döring Neuer Wall 41,
D-2000 Hamburg 36 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Leitungsrohr aus Kunststoff

Die Erfindung bezieht sich auf ein Leitungsrohr aus Kunststoff, insbesondere Kanalrohr mit einem grossen Durchmesser, mit einem glatten Innenrohr, das an einem Ende eine muffenartige Erweiterung aufweist zur Aufnahme des glatten Endes eines anderen Innenrohres, und einem getrennt hergestellten, mit Wellungen versehenen Aussenrohr, in das das Innenrohr eingeschoben wird, wobei die Wellentäler an der Aussenseite des Innenrohrs anliegen und ggf. in Abständen befestigt werden und wobei das eine Ende des Aussenrohres an der rückseitigen Schulter der Erweiterung des Innenrohres endet.

Ein derartiges Leitungsrohr ist bekannt (US-A-4037 626). Es dient als grosskalibriges Rohr insbesondere als Kanalrohr, wie sie früher aus Steingut, Beton oder ähnlichem schweren Material hergestellt worden sind. Ein derartiges Verbundrohr aus Kunststoff hat den Vorteil, dass es verhältnismässig leicht ist und auch verhältnismässig leicht verlegt werden kann. Innen- und Aussenrohr werden getrennt hergestellt und anschliessend zusammengebracht. Ein derartiges Verfahren ist vorteilhafter als das Verfahren nach der sogenannten Koextrusion, bei dem Innen- und Aussenrohr gleichzeitig extrudiert werden. Das Koextrusionsverfahren ist verhältnismässig aufwendig und birgt die Gefahr, dass durch Spannungen beim Abkühlen die Innenseite des Innenrohres nicht glatt zylindrisch wird.

Das verhältnismässig geringe Gewicht des bekannten Verbundrohres kann sich jedoch auch als Nachteil erweisen, wenn die daraus bestehende Leitung in verhältnismässig weichem Boden mit viel Grundwasser oder sogar im Wasser selbst verlegt wird. Im Boden oder im Wasser vorhandene Auftriebskräfte können die Leitung mehr oder weniger anheben und dadurch die Verbindungsstellen undicht machen.

Der Erfindung liegt daher die Aufgabe zugrunde, ein Leitungsrohr, insbesondere Kanalrohr mit grossem Durchmesser zu schaffen, das auch in weichem auftreibenden Boden oder unter Wasser verlegbar ist.

Diese Aufgabe wird erfindungsgemäss dadurch gelöst, dass das Innenrohr eine lichte Weite von 20 bis 50 cm und grösser und eine Wanddicke von 3 bis 10 mm aufweist, das Aussenrohr eine Wanddicke von 1,5 bis 5 mm aufweist, die Wellenberge des Aussenrohres verschliessbare Öffnungen für ein beschwerendes Füllmaterial zwischen Aussen- und Innenrohr aufweisen, das Aussenrohr am anderen Ende im Abstand vom anderen Ende des Innenrohres endet und eine, mindestens zwei Wellen aufweisende, von der muffenartigen Erweiterung einen radialen Abstand aufweisende geteilte Manschette mit der Endwellung zweier benachbarter Aussenrohre formschlüssig in Eingriff bringbar ist.

Beim erfindungsgemässen Leitungsrohr dienen die verschliessbaren Öffnungen in den Wellenbergen des Aussenrohres dazu, beschwerendes Füllmaterial einzufüllen, um ein Auftreiben der Rohrleitung zu verhindern. Als beschwerendes Material kann beispielsweise Wasser dienen. Zweckmässigerweise wird das beschwerende Material erst am Ort der Verlegung eingefüllt, um unnötige Transportkosten zu vermeiden. Die geteilte Manschette, welche in einem radialen Abstand mit der Endwellung zweier benachbarter Aussenrohre formschlüssig in Eingriff ist, sorgt für die Fortsetzung des Aufnahmeraumes zwischen Aussen- und Innenrohr, so dass auch im Verbindungsbereich Beschwerungsmittel eingebracht werden kann. Würde ein derartiger Aufnahmeraum nicht geschaffen, greifen unterschiedliche Querkräfte am Verbindungsbereich an und können dadurch die wirksame Abdichtung zwischen den Innenrohren beeinträchtigen.

Es ist zwar bekannt, gewellte Rohrleitungen mittels gewellter Manschetten miteinander zu verbinden (z.B. US-A 977 945 oder US-A 3 572 394). Diese Manschetten dienen jedoch dazu, die Rohre mechanisch fest zusammenzuhalten. Bei der Erfindung hingegen kommt es auf die mechanisch feste Verbindung der Aussenrohre nicht an, da die eigentliche Verbindung der Verbundrohre über die Muffenverbindung der Innenrohre stattfindet.

Vorteilhafte Ausgestaltungen der Erfindung sind in den Unteransprüchen angegeben.

Die Erfindung wird anhand von Ausführungsbeispielen näher erläutert.

Fig. 1
zeigt einen Schnitt durch ein Teil des Leitungsrohres nach der Erfindung.

Fig. 2
zeigt einen Schnitt durch zwei verbundene Leitungsrohre nach der Erfindung.

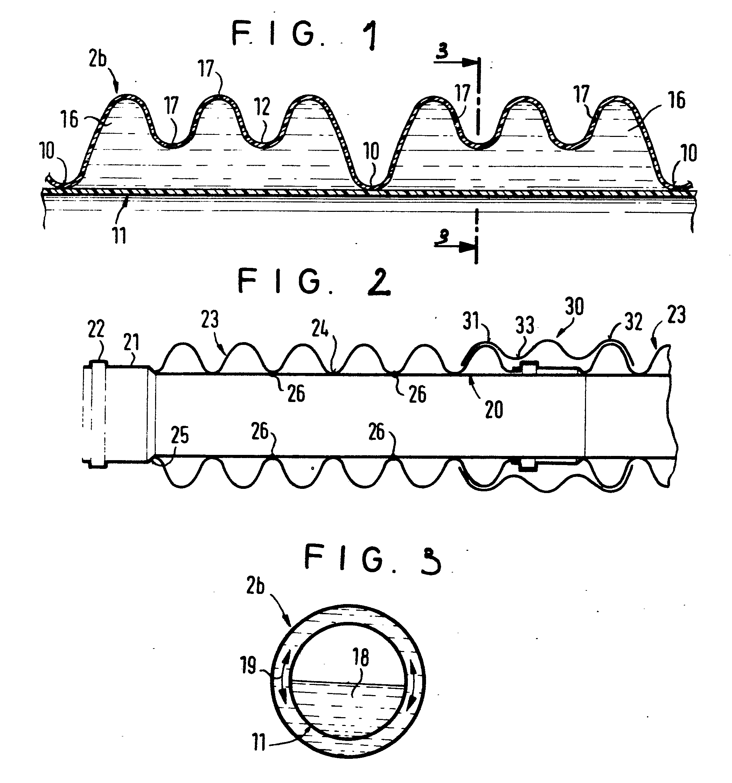

Fig. 3
zeigt einen Schnitt durch das Leitungsrohr nach Fig. 1 entlang der Linie 3–3.

Fig. 1 zeigt ein glattes Innenrohr 11, das durch schlauchförmiges Extrudieren hergestellt wurde und auf welchem ein Aussenrohr 2b aufgeschoben ist.

Vom Aussenrohr 2b liegt nur jedes dritte Wellental 10 am Innenrohr 11 an, während die dazwischenliegenden Wellentäler 12 gleichen radialen Abstand davon aufweisen.

Die Grösse der Wellen kann beliebig sein. In der Praxis hat sich ein Verhältnis von Gesamtrohrquerschnitt zu Wellenhöhe von 2:0,1 bis 0,2 als besonders zweckmässig erwiesen.

Flüssiges Füllmaterial 16 wird über Öffnungen 17 eingebracht. (Es müssen bei Ringwellung mindestens zwei Löcher vorgesehen sein.) Falls eine schraubenlinienförmige Wellung verwendet wird, erleichtert dies das Einfüllen von Füllmaterial, da nur Anfang und Ende des schraubenlinienförmigen Kanals offen zu sein brauchen.

In Fig. 3. sind Aussenrohr 2 b und Innenrohr 11 quer geschnitten. Es ist ferner dargestellt, dass abgeleitete Flüssigkeit 18, z.B. Abwasser, nur ein Teil des Strömungsquerschnitts einnimmt. Durch die Doppelpfeile ist nun angedeutet, dass eine lokale Erwärmung im unteren Bereich durch heisses Abwasser über das gesamte Volumen des flüssigen Füllmaterials ausgeglichen und somit eine zu starke Wärmebeanspruchung vermieden wird.

Die Löcher 17 können bereits vor dem Zusammenbau des Leitungsrohres in das Aussenrohr 2 bzw. 2b geformt werden, indem man in das, eventuell noch plastisch verformbare Wellenrohr nach Verlassen der Wellungformungsvorrichtung an einer mit mindestens zwei Stechwerkzeugen versehene Vorrichtung vorbeiführt. Es können auch Stanzvorrichtungen verwendet werden, wie es bei der Lochung von Dränagerohren üblich ist.

Alternativ wird die Lochung am fertig zusammengebauten Rohrkörper vorgenommen, vorzugsweise mit einer dornartigen Spritzdüse, durch die das Füllmaterial während oder nach dem Einstechen eingespritzt wird. Durch Warmgasverschweissung oder Ultraschallverschweissung können die Löcher wieder verschlossen werden.

Bei dem Doppelrohr nach Fig. 2 ist das Innenrohr 20 wie ein herkömmliches Kanalgrundrohr aus Kunststoff geformt mit einer muffenartigen Erweiterung 21 an einem Ende. Eine Nut 22 in der Erweiterung dient zur Aufnahme einer Dichtung. Ein gewelltes Aussenrohr 23 ist auf das Innenrohr 20 aufgeschoben, wobei alle Wellentäler 24 an der Aussenseite des Innenrohrs 20 anliegen. Mit einem Wellental stösst das Aussenrohr 23 gegen die angefaste rückseitige Schulter 25 der Erweiterung 21 und ist hier durch Schweissung befestigt. Weitere Befestigungsstellen (Punktschweissung) sind bei 26 dargestellt.

Das rechte Ende des Aussenrohres 23 ist im Abstand vom glatten Ende des Innenrohres 20 ebenfalls mit einem Wellental am Innenrohr befestigt, z.B. durch Schweissung. Es lässt dadurch Platz für die muffenförmige Erweiterung des Innenrohrs des zu verbindenden Doppelrohres. Eine aus zwei Hälften bestehende klapp- oder schwenkbare Manschette 30 übergreift mit zwei Wellenbergen 31 bzw. 32 die letzten Wellenberge benachbarter Aussenrohre 23, wobei ihre Wellentäler 33 in kurzem radialen Abstand zur Muffenverbindung der Innenrohre 20 bleiben, um diese freizulassen.

Die Fixierung des Aussenrohrs 23 am Innenrohr 20 kann möglicherweise entfallen, da die Manschette für eine ausreichende Lagesicherung der Aussenrohre sorgt. Es ist auch denkbar, die Befestigung der Aussenrohre durch Spannbänder in den Wellentälern vorzunehmen, etwa anstelle des Verschweissens.

Das gezeigte Leitungsrohr besteht aus irgendeinem geeigneten thermoplastischen Kunststoff, z.B. Polyvinylchlorid, Polyethylen, Polyamid. Vorzugsweise sind Innenrohr und Aussenrohr aus dem gleichen Material. Als Füllmaterial dient z.B. Wasser oder eine Sandschlämmung. Das Innenrohr 20 hat eine lichte Weite von 20 bis 50 cm und mehr und eine Wanddicke von 3 bis 10 mm. Das Aussenrohr 23 hat eine Wanddicke von 1,5 bis 5 mm.

## Patentansprüche

1. Leitungsrohr aus Kunststoff, insbesondere Kanalrohr mit grossem Durchmesser, mit einem glatten Innenrohr (11, 20), das an einem Ende eine muffenartige Erweiterung (21, 23) aufweist zur Aufnahme des glatten Endes eines anderen Innenrohres, und einem getrennt hergestellten, mit Wellungen versehenen Aussenrohr (2b, 23), in das das Innenrohr eingeschoben wird, wobei die Wellentäler (10, 24) an der Aussenseite des Innenrohres anliegen und gegebenenfalls in Abständen befestigt werden und wobei das eine Ende des Aussenrohres an der rückseitigen Schulter der Erweiterung des Innenrohres endet, dadurch gekennzeichnet, dass das Innenrohr (11, 20) eine lichte Weite von 20 bis 50 cm und grösser und eine Wanddicke von 3 bis 10 mm aufweist, das Aussenrohr (2b, 23) eine Wanddicke 1,5 bis 5 mm aufweist, die Wellenberge des Aussenrohres verschliessbare Öffnungen (17) für ein beschwerendes Füllmaterial (16) zwischen Aussen- und Innenrohr aufweisen, das Aussenrohr (2b, 23) am anderen Ende im Abstand vom anderen Ende des Innenrohres (11, 20) endet und eine, mindestens zwei Wellen (31, 32) aufweisende, von der muffenartigen Erweiterung (21, 22) einen radialen Abstand aufweisende geteilte Manschette (30) mit der Endwellung zweier benachbarter Aussenrohre (2b, 23) formschlüssig in Eingriff bringbar ist.

2. Leitungsrohr nach Anspruch 1, dadurch gekennzeichnet, dass das Innenrohr (11, 20) und das Aussenrohr (2b, 23) in regelmässigen Abständen durch Punktverschweissung miteinander verbunden sind.

3. Leitungsrohr nach Anspruch 1 oder 2, dadurch gekennzeichnet, dass die Wellentäler und die Wellenberge etwa gleiche Breite haben.

4. Leitungsrohr nach Anspruch 3, dadurch gekennzeichnet, dass die Breite der Wellentäler und -berge 5 bis 20 mm beträgt.

## Claims

1. A line pipe of synthetic material, especially sewer pipe of large size diameter, comprising a smooth inner pipe (11, 20) provided with a socket-like enlargement (21, 22) at one end for the reception of the smooth end of another inner pipe, and a separately manufactured outer pipe (2b, 23) provided with corrugations which is pushed into the inner pipe, with the wave crests (10, 24) lying in close contact against the outer surface of the inner pipe and in a given case fastened thereat at intervals, and with the one end of the outer pipe terminating at the rearward shoulder of the enlargement of the inner pipe, characterized in that the inner pipe (11, 20) has a bore of 20 to 50 cm and more and a wall gauge from 3 to 10 mm, the outer pipe (2b, 23) has a wall gauge from 1.5 to 5 mm, the wave crests of the outer pipe are provided with apertures (17) adapted to be closed for a weighting filling material (16) between outer and inner pipes, the outer pipe (2b, 23) terminates at the other end thereof at a distance from the other end of the inner pipe (11, 20), and in that a split sleeve (30) provided with at least two waves (31, 32) which is spaced from the socket-like enlargement (21, 22) through a radial distance is adapted to be brought into form-closed engagement with the terminal corrugation of two adjacent outer pipes (2b, 23).

2. A line pipe according to claim 1, characterized in that the inner pipe (11, 20) and the outer pipe (2b, 23) are connected to each other by spot welding at regular intervals.

3. A line pipe according to claim 1 or 2, characterized in that the wave troughs and wave crests are about equal in width.

4. A line pipe according to claim 3, characterized in that the width of the wave troughs and crests is from 5 to 20 mm.

**Revendications**

1. Tuyau de conduite en matière synthétique, en particulier tuyau d'égoût à grand diamètre, comportant un tuyau intérieur lisse (11, 20) qui présente à une extrémité un élargissement en forme de manchon (21, 22) pour recevoir l'extrémité lisse d'un autre tuyau intérieur, et un tuyau extérieur (2b, 23) fabriqué séparément, qui est pourvu d'ondulations et dans lequel le tuyau intérieur est enfilé, les creux (10, 24) d'ondulation s'appliquant sur le côté extérieur du tuyau intérieur et étant fixés éventuellement avec espacements, une extrémité du tuyau extérieur se terminant à l'épaulement arrière de l'élargissement du tuyau intérieur, caractérisé en ce que le tuyau intérieur (11, 20) présente un passage libre de 20 à 50 cm ou plus et une épaisseur de paroi de 3 à 10 mm, en ce que le tuyau extérieur (2b, 23) comporte une épaisseur de paroi de 1,5 à 5 mm, en ce que les sommets d'ondulation du tuyau extérieur présentent des ouvertures obturables (17) pour loger une matière de remplissage pondéreuse (16) entre le tuyau extérieur et le tuyau intérieur, en ce que le tuyau extérieur (2b, 23) se termine à l'autre extrémité avec un certain écartement vis-à-vis de l'autre extrémité du tuyau intérieur (11, 20) et en ce qu'un collier partagé (30), comportant au moins deux ondulations (31, 32) et présentant un écartement radial par rapport à l'élargissement (21, 22) en forme de manchon, peut être amené en prise, grâce à sa forme, avec l'ondulation terminale de deux tuyaux extérieurs voisins (2b, 23).

2. Tuyau de conduite selon la revendication 1, caractérisé en ce que le tuyau intérieur (11, 20) et le tuyau extérieur (2b, 23) sont reliés ensemble par soudage par points à espacements réguliers.

3. Tuyau de conduite selon la revendication 1 ou 2, caractérisé en ce que les creux d'ondulation et les sommets d'ondulation ont sensiblement la même largeur.

4. Tuyau de conduite selon la revendication 3, caractérisé en ce que la largeur des sommets et des creux d'ondulation est de 5 à 20 mm.

# F I G . 1

# F I G . 2

# F I G . 3